# EUROPEAN PATENT SPECIFICATION

(11) **EP 2 547 049 B1**
(45) Date of publication and mention of the grant of the patent: **19.09.2018**
(21) Application number: 10851946.3
(22) Date of filing: 25.05.2010
(51) Int. Cl.: H04L 29/06, H04L 29/08, H04W 4/24, H04M 15/00, H04L 12/14, H04L 12/24

(54) **METHOD, SYSTEM AND CORRESPONDING APPARATUS FOR IMPLEMENTING POLICY AND CHARGING CONTROL**
VERFAHREN, SYSTEM UND ENTSPRECHENDE VORRICHTUNG ZUR UMSETZUNG EINER RICHTLINIEN- UND GEBÜHRENKONTROLLE
PROCÉDÉ, SYSTÈME ET DISPOSITIF ASSOCIÉ POUR LA MISE EN OEUVRE D'UN CONTRÔLE DE POLITIQUE ET DE TARIFICATION

(43) Date of publication of application: 16.01.2013
(73) Proprietor: Huawei Technologies Co., Ltd., Longgang District Shenzhen, Guangdong 518129 (CN)
(72) Inventor: SHI, Xiaoyan, Shenzhen, Guangdong 518129 (CN)
(74) Representative: Schmitz, Alexander
(86) International application number: PCT/CN2010/073185
(87) International publication number: WO 2011/147074

(56) References cited:
- WO-A1-2009/024182
- CN-A- 101 163 091
- CN-A- 101 483 847
- CN-A- 101 572 854
- "3GPP-BBF Interworking Policy & QoS", 3GPP DRAFT; FMC100013_3GPP-BBF-POLICY-QOS-08, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 11 February 2010 (2010-02-11), XP050647869, [retrieved on 2010-02-11]
- ALCATEL-LUCENT ET AL: "3GPP-BBF Interworking S9* Interface: Requirements and Protocol Selection Criteria", 3GPP DRAFT; FMC100019, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 11 February 2010 (2010-02-11), XP050647871, [retrieved on 2010-02-11]
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.1, 24 March 2010 (2010-03-24), pages 1-37, XP050402025, [retrieved on 2010-03-24]
- "Generic Policy Control for Local Breakout", IP.COM JOURNAL, IP.COM INC., WEST HENRIETTA, NY, US, 17 November 2009 (2009-11-17), XP013135390, ISSN: 1533-0001
- "3rd Generation Partnership Project; Technical Specification Group Services and System Aspects; Study on Support of BBF Access Interworking (Release 10)", 3GPP STANDARD; 3GPP TR AB.CDE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 21 May 2010 (2010-05-21), pages 1-55, XP050441466, [retrieved on 2010-05-21]

## Description

### FIELD OF THE INVENTION

The present invention relates to the field of communications, and in particular, to a method, a system, and a corresponding device for implementing policy and charging control.

### BACKGROUND OF THE INVENTION

In an EPC (Evolved Packet Core, evolved packet core network), a PCRF (Policy Control and Charging Rules Function, policy control and charging rules function) entity is used to determine a policy and charging control rule that is applicable to a user, according to restrictions for access of the user to a network, an operator policy, user subscription data, and information about currently ongoing services of the user, and so on, so as to implement control on QoS (Quality of Service, quality of service) which corresponds to a service data stream, and charging based on a data stream; a PGW (PDN Gateway, packet data network gateway) is used to connect to a PDN (Packet Data Network, packet data network) and is responsible for forwarding and filtering of a user data stream, where the PDN provides services; and Non-3GPP IP Access (non-3GPP IP access) is used for an IP access manner except 3GPP, such as 3GPP2 access, WiMAX (Worldwide Interoperability for Microwave Access, worldwide interoperability for microwave access) access, and so on, and may have some additional functions such as mobility management.

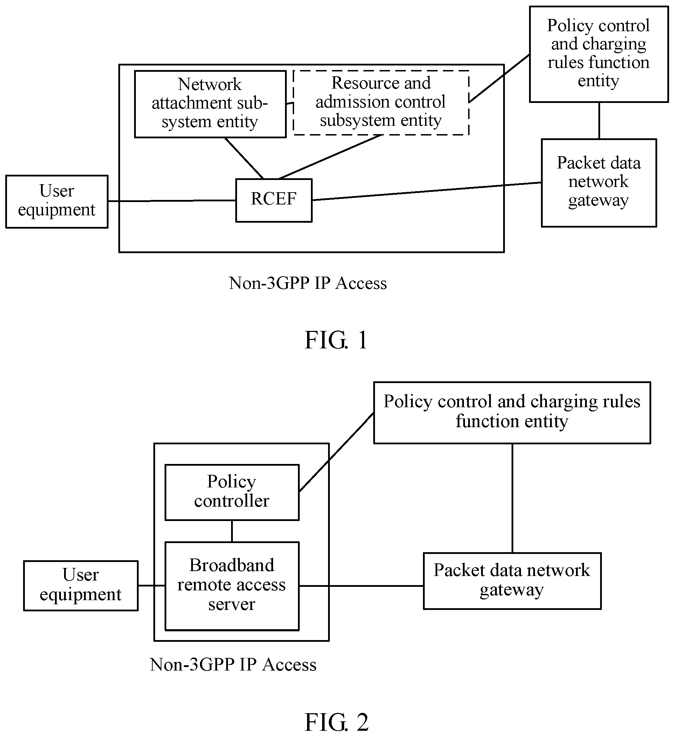

FIG. 1 shows a TISPAN (Telecommunications and Internet Converged Services and Protocols for Advanced Networking, telecommunications and Internet converged services and protocols for advanced networking) defined scene where a fixed network connects to the EPC. A block shows an implementation manner for Non-3GPP IP Access in this scene. A NASS (Network Attachment Sub-System, network attachment sub-system) entity in Non-3GPP IP Access of FIG. 1 is used to allocate an IP address for a UE (User Equipment, user equipment); an RACS entity (Resource and Admission Control Subsystem, resource and admission control subsystem) is used to establish a policy control session with the PCRF entity, and acquire the policy and charging control rule from the PCRF entity, thereby implementing control on QoS of an RCEF (Resource Control Enforcement Function, resource control enforcement entity, equivalent to an AGW). When convergence policy control is adopted, the RACS entity may not be required.

FIG. 2 shows a BBF (Broadband Forum, Broadband Forum) defined scene where the fixed network connects to the EPC. A block shows an implementation manner for Non-3GPP IP Access in this scene. A BRAS (Broadband Remote Access Server, broadband remote access server) in Non-3GPP IP Access is used to allocate an IP address for the UE, and a Policy Controller (policy controller) is used to establish a policy control session with the PCRF entity, and acquire the policy and charging control rule from the PCRF entity, thereby implementing QoS control on the BRAS (equivalent to the AGW). When convergence policy control is adopted, the Policy Controller may not be required.

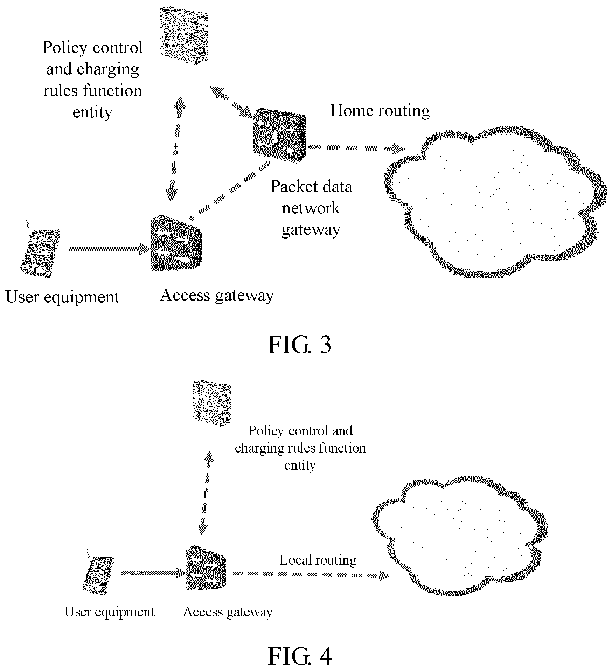

In the foregoing two scenes, when the UE connects to the EPC, the EPC may provide two routing manners for the UE: home routing and local routing (also called local conflict). Home routing, as shown in FIG. 3, indicates that the user's data stream is forwarded by the AGW to the PGW and communicates with an external network through the PGW. Local routing, as shown in FIG. 4, indicates that the user's data stream does not pass through the PGW, but is directly forwarded by the AGW to the external network.

In the prior art, policy and charging for the UE are mainly implemented through the following manner: When receiving an IP connection establishment request from the UE, the AGW establishes a gateway control session with the PCRF entity, and initiates a binding update message of a proxy mobile IP to the PGW; after receiving the binding update message, the PGW establishes an IP-CAN (IP Connectivity Access Network, IP connectivity access network) session with the PCRF entity; the PCRF entity associates the gateway control session with the IP-CAN session according to information such as an identity of the UE and an identity of the packet data network; when receiving a service resource request sent by an AF (Application Function, application function) entity, the PCRF entity searches for the IP-CAN session that matches the service resource request, and formulates the policy and charging control rule; the PCRF entity transfers the policy control rule in the policy and charging control rule through the gateway control session to the AGW for QoS control, and transfers the policy and charging control rule through the IP-CAN session to the PGW for QoS control and charging control.

During the implementation of the foregoing process, the inventor finds that the prior art may lead to the following results: When the AGW provides a local routing manner for the UE, the data stream no longer passes through the PGW; in addition, because the data stream no longer passes through the PGW, the charging control rule may not be acquired to implement the charging control on services . That is, a solution for implementing policy and charging control through the PGW may not be implemented.

3^{rd} Generation Partnership Project (3GPP): Local IP Access and Selected IP Traffic Offload relates to local IP access to residential/corporate local network for home subsystems, to selected IP internet traffic offload for home subsystems, and to selected IP internet or corporate traffic offload for a macro network. In particular, the architectural aspects are related to achieving the said objectives.

The 3GPP-BBF FMC Workshop presentation document entitled "3GPP-BBF Interworking, Policy & QoS" (3GPP Document ID FMC100013, presented at 3GPP-BBF FMC Workshop, 18-19 February 2010) provides an overview of 3GPPs and BBFs respective policy and QoS framework, functions and interfaces, a proposal for an interworking architecture and further work areas. The document also comprises on/off-path and breakout scenarios for BBF-3GPP interworking and comprehensive policy and charging control for fixed mobile convergence networks comprising broadband access gateways, IP-CAN networks and 3GPP core network elements, including PCRF and charging components. Identified areas for further work include e.g. the functional split between BBF and 3GPP policy and charging elements, charging for offloaded traffic, and requirements for interconnecting BBF and 3GPP policy elements, e.g. via an enhanced S9* interface.

### SUMMARY OF THE INVENTION

A first embodiment of the present invention provides a method for implementing policy and charging, wherein a fixed network connects to an evolved packet core network, including:
receiving, by an access control entity, from a user equipment a message that requests connection establishment, wherein the message that requests connection establishment specifies a request for establishing a new IP connection and the message that requests connection establishment comprises an identity of the user equipment; and the access control entity comprises a broadband remote access server, BRAS;
associating, by the access control entity, routing decision information of corresponding user equipment according to the identity of the user equipment, and determining to provide the local routing service for the user equipment according to the routing decision information;
sending, by the access control entity, a session establishment request to a transfer policy server, wherein the session establishment request comprises an indication for providing a local routing service;
formulating, by the transfer policy server, a policy and charging control rule according to control rule decision information; wherein the control rule decision information comprises a local control policy, wherein the policy and charging control rule is used for a local routing service;
sending, by the transfer policy server, the policy and charging control rule through a policy control session response message to a policy executing entity, wherein the policy executing entity is the BRAS.

A second embodiment of the present invention provides a system for implementing policy and charging, comprising an access control entity and a transfer policy server, wherein:
the access control entity is configured to receive from a user equipment a message that requests connection establishment, wherein the message that requests connection establishment specifies a request for establishing a new IP connection and the message that requests connection establishment comprises an identity of the user equipment; and the access control entity comprises a broadband remote access server, BRAS; associate routing decision information of corresponding user equipment according to the identity of the user equipment, and determine to provide the local routing service for the user equipment according to the routing decision information; send a session establishment request to the transfer policy server, wherein the session establishment request comprises an indication for providing a local routing service;
the transfer policy server is configured to formulate a policy and charging control rule according to control rule decision information; wherein the control rule decision information comprises a local control policy, wherein the policy and charging control rule is used for a local routing service; and send the policy and charging control rule through a policy control session response message to a policy executing entity, wherein the policy executing entity is the BRAS.

Further embodiments of the present invention are provided in accordance with dependent method claims 2-5.

Through a technical means of carrying in the session establishment request the indication for providing the local routing service, it is convenient for the transfer policy server to send to the policy executing entity the policy and charging control rule of the local routing service according to the indication, and then in a local routing manner, the solutions provided in the embodiments provide a method for acquiring the policy and charging control rule, where association with a corresponding IP-CAN session is not required and the PGW is not required to participate, thereby realizing that in the case without the PGW, the local routing service of QoS control and service traffic charging may still be provided for the user.

### BRIEF DESCRIPTION OF THE DRAWINGS

FIG. 1 is a schematic diagram of a TISPAN defined scene where a fixed network connects to an EPC;
FIG. 2 is a schematic diagram of a BBF defined scene where a fixed network connects to an EPC;
FIG. 3 is a schematic diagram of executing a home routing manner;
FIG. 4 is a schematic diagram of executing a local routing manner;
FIG. 5 is a schematic flow chart of a method for implementing a policy and charging control rule according to a first embodiment of the present invention;
FIG. 6 is a schematic diagram of a method for implementing a policy and charging control rule in a scene according to a second embodiment of the present invention;
FIG. 7 is a schematic diagram of a method for implementing a policy and charging control rule in a scene according to a third embodiment of the present invention;
FIG. 8 is a schematic diagram of a method for implementing a policy and charging control rule in a scene according to a fourth embodiment of the present invention;
FIG. 9 is a schematic diagram of a method for implementing a policy and charging control rule in a scene according to a fifth embodiment of the present invention;
FIG. 10 is a schematic diagram of a method for implementing a policy and charging control rule in a scene according to a sixth embodiment of the present invention;
FIG. 11 is a schematic diagram of a method for implementing a policy and charging control rule in a scene according to a seventh embodiment of the present invention;
FIG. 12 is a schematic diagram of a method for implementing a policy and charging control rule in a scene according to an eighth embodiment of the present invention;
FIG. 13 is a schematic diagram of a method for implementing a policy and charging control rule in a scene according to a ninth embodiment of the present invention;
FIG. 14 is a schematic structural diagram of a policy server according to a tenth embodiment of the present invention;
FIG. 15 is a schematic structural diagram of an access control entity according to an eleventh embodiment of the present invention;
FIG. 16 is a schematic structural diagram of another access control entity according to an eleventh embodiment of the present invention;
FIG. 17 is a schematic diagram of a system for implementing a policy and charging control rule according to a twelfth embodiment of the present invention.

### DETAILED DESCRIPTION

The technical solutions of the present invention are described in the following with reference to the accompanying drawings in the examples of the present invention. Apparently, the described examples are merely a part rather than all of the examples of the present invention.

When an AGW provides a local routing manner for a UE, a data stream no longer passes through a PGW, and the PGW does not establish an IP-CAN session with a PCRF entity either, and then, when receiving a service resource request sent by an AF entity, the PCRF entity cannot associate with a valid IP-CAN session. As a result, the PCRF entity cannot formulate a policy and charging control rule of the user, and the AGW cannot acquire a policy control rule, thereby implementing QoS control. In addition, because the data stream no longer passes through the PGW, a charging control rule cannot be acquired to implement the charging control on services.

### Example

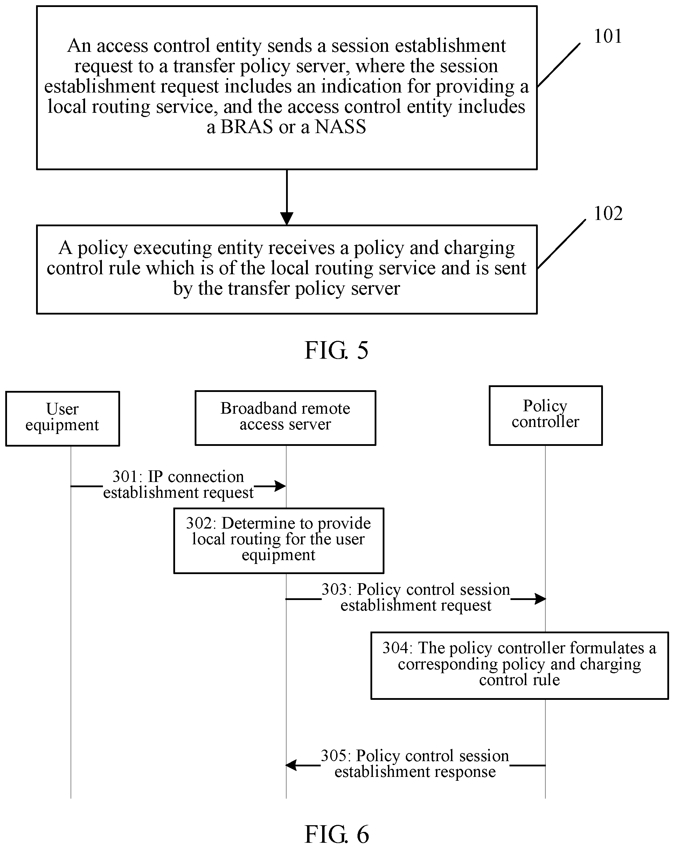

This example provides a method for implementing policy and charging control rule. As shown in FIG. 5, this method mainly includes:
Step 101: An access control entity sends a session establishment request to a transfer policy server, where the session establishment request includes an indication for providing a local routing service, and the access control entity includes a BRAS or a NASS.
Step 102: A policy executing entity receives a policy and charging control rule which is of the local routing service and is sent by the transfer policy server.

It should be noted that the policy and charging control rule mentioned in this embodiment and subsequent embodiments may merely include a policy control rule, and may also merely include a charging control rule, or may include control rules of policy and charging at the same time.

By notifying the transfer policy server of a decision which determines to provide the local routing service and is carried in the session establishment request, it may be convenient for the transfer policy service to adopt an execution method which corresponds to the local routing manner, so that the method provided in this embodiment avoids a technical problem where the transfer policy server associates with an incorrect IP-CAN session according to an existing manner caused by no indication, thereby delivering an incorrect policy and charging control rule, and at the same time, also facilitates realization of policy and charging control when the local routing service is provided for a user.

### Example 2

This example provides a method for implementing policy and charging control specifically with reference to FIG. 6. FIG. 6 is mainly applicable to a BBF defined scene where a fixed network connects to an EPC. In this scene, a BRAS has a function of connecting a UE and a network and a function of executing a policy and charging control rule, and therefore, it is equivalent to an access control entity and is also equivalent to a policy executing entity; a Policy Controller (policy controller) is equivalent to a transfer policy server, and is used to formulate the policy and charging control rule in this embodiment.

Step 301: The UE initiates to the BRAS a message for establishing a connection, where the message includes an identity of the UE and specifies a request for establishing a new IP connection, and the BRAS receives the message.

The message in this example and subsequent examples is a PPP (Point to Point Protocol, point to point protocol) connection establishment request message, a DHCP (Dynamic Host Configuration Protocol, dynamic host configuration protocol) request message, an attachment request message, a PDN (Packet Data Network, packet data network) connection establishment request message, and so on; the identity of the UE may be an IMSI (International Mobile Subscriber Identity, international mobile subscriber identity) of the UE, a user name of the UE, an IP address, a connection line identity, a logical interface identity, and so on, which is not strictly restricted here.

Step 302: Triggered by the foregoing message, the BRAS, according to the identity of the UE, associates routing decision information which corresponds to the UE, such as a local routing policy and subscription data of a user, and according to the routing decision information, the BRAS determines to provide a local routing service for the UE.

For example, the BRAS associates subscription data of the user of the UE and the local routing policy of the user of the UE according to the identity of the UE, where the subscription data of the user indicates that the UE is a fixed network user, and the local routing policy indicates that the fixed network user adopts a local routing manner; and therefore, the BRAS determines to provide the local routing service for the user.

It should be noted that in the scene of the example, the foregoing subscription data of the user is deployed locally on the BRAS, and therefore, the BRAS may directly utilize local subscription data of the user. Actually, however, according to different network deployment or planning, the subscription data of the user may further be not on the BRAS locally, but may exist in another device. In this case, the subscription data of the user only needs to be acquired from another device through signaling interaction.

Step 303: The BRAS initiates a policy control session establishment request message to the Policy Controller, and carries an indication for providing the local routing service in the request.

The foregoing policy control session establishment request message includes many, for example, an IP-CAN session message, an S9 session message, and so on. The same is true for the policy control session establishment request mentioned in subsequent embodiments.

Alternatively in this example and subsequent examples the session establishment request message that includes the indication for providing the local routing service and is sent by the access control entity to the policy server may include the identity of the UE. When the identity of the UE is included, it is for ease of specifying a particular UE to which the requested local routing service is specifically applied.

Step 304: After receiving the policy control session establishment request message, under the indication that is for providing the local routing service and is in the request message, the Policy Controller formulates, according to control rule decision information, the policy and charging control rule that is used for the local routing service.

In this example and subsequent examples, the control rule decision information mainly refers to a local control policy, and may further include: user subscription data, service resource request information of AF (Application Function, application function), and so on.

For example, the local control policy formulates that: Allocate a bandwidth of 2 Mbit/s when the local routing service is requested; allocate a bandwidth of 1 Mbit/s when a non-local routing service is requested; users are not differentiated. Therefore, when the policy and charging control rule that is used for the local routing service needs to be formulated only according to the local control policy, the Policy Controller allocates the bandwidth of 2 Mbit/s according to the regulation in the policy.

For example, when the session establishment request includes the identity of the UE and when the policy and control charging rule of the local routing service is formulated, reference may be made to the local control policy and the user subscription data of the UE at the same time. The specific process is as follows: The Policy Controller associates the local control policy and user subscription data (in this embodiment, it is assumed that the user subscription data is deployed locally on the Policy Controller) according to the identity of the UE, where the user subscription data of the UE specifies that the UE accesses through WiFi and an access bandwidth is 2 Mbit/s; and the local control policy formulates that the UE which accesses through WiFi (Wireless Fidelity, wireless fidelity) and whose access bandwidth is 2 Mbit/s should execute according to a policy and charging control rule A (the policy and charging control rule A may specifically be: QoS of the UE is WiFi, the bandwidth is 2 Mbit/s, and the traffic of the UE is charged by 0.50 yuan per minute, and so on). Because a specific process of formulating a related policy and charging control rule according to a local policy and user subscription data is applied in the prior art and can be easily acquired by persons skilled in the art, it is not repeatedly described here.

Step 305: The Policy Controller sends a determined policy and charging control rule of the local routing service through a policy control session establishment response message to the BRAS, and the BRAS performs the following according to the rule, including QoS control and traffic-based charging.

In this embodiment, the foregoing Policy controller may also be replaced by a PCRF entity. The specific execution process is not repeatedly described here.

Through a technical means of enabling the BRAS to acquire the policy and charging control rule in the BBF defined scene where the fixed network connects to the EPC, the method provided in this example realizes an effect of executing the policy and charging control when the local routing service is provided for the user.

### Example 3

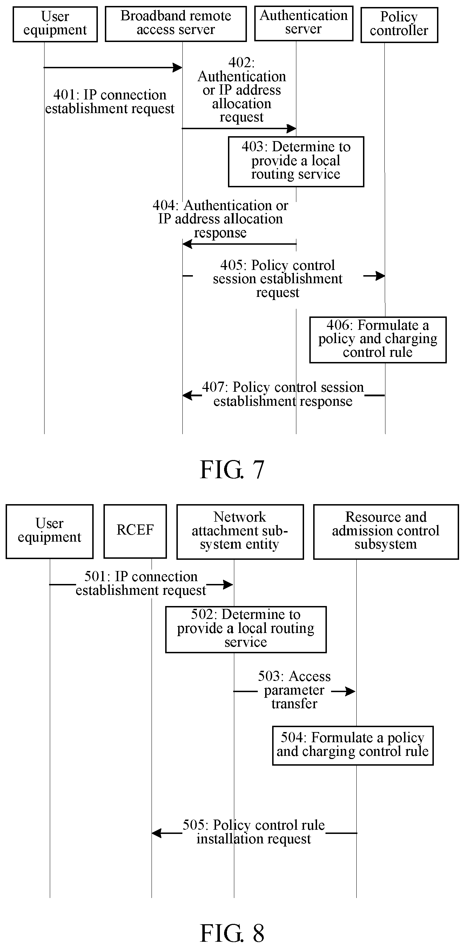

This example provides a method for implementing policy and charging control specifically with reference to a scene shown in FIG. 7 where an authentication server is introduced, and the scene is mainly applicable to a BBF defined scene where a fixed network connects to an EPC. In this scene, a BRAS has a function of connecting a UE and a network and a function of executing a policy and charging control rule, and therefore, it is equivalent to an access control entity and is also equivalent to a policy executing entity; the Policy Controller is equivalent to a transfer policy server and is used to formulate the policy and charging control rule in this example. A difference between it and a second example is that the authentication server determines whether to provide and adopt a local routing service for a user. The authentication server may specifically be an AAA (Authorization, Authentication and Accounting, authorization, authentication and accounting) server, or a DHCP server, and so on.
Step 401: A UE initiates to the BRAS a message for establishing a connection, where the message includes an identity of the UE and specifies a request for establishing a new IP connection, and the BRAS receives the message.
Step 402: Triggered by the foregoing message, the BRAS initiates an authentication or address allocation request message to the authentication server, where the request message includes the identity of the UE.
Step 403: The authentication server, according to the identity of the UE, associates routing decision information which corresponds to the UE, such as a local routing policy and subscription data of the user, and according to the routing decision information, determines to provide the local routing service for the UE.
   For the foregoing content of specifically determining the local service, reference may be made to the example in step 302 of the second example.
Step 404: The authentication server sends an authentication or IP address allocation response message to the BRAS, and indicates in the response message that the local routing service is provided for the UE.

For the following content of step 405 to step 407, reference may be made to step 303 to step 305 in the second example, which is not repeatedly described here.

In this example, the foregoing Policy controller may also be replaced by a PCRF entity. The specific execution process is not repeatedly described here.

The method provided in this example provides a solution for implementing the policy and charging control when the local routing service is provided for the user in the case that the authentication server exists, and may ensure that a normal QoS service and normal charging control are provided for the user.

### Example 4

This example provides a method for implementing policy and charging control specifically with reference to FIG. 8. FIG. 8 is mainly applicable to a TISPAN defined scene where a fixed network connects to an EPC. In this scene, a NASS entity has a function of connecting a UE and a network, and may be equivalent to an access control entity; an RCEF has a function of executing a policy and charging control rule, and therefore, it may be regarded as a policy executing entity; and an RACS is equivalent to a transfer policy server in this embodiment, and is used to formulate the policy and charging control rule.

Step 501: The UE initiates to the NASS a message for establishing a connection, where the message includes an identity of the UE and specifies a request for establishing a new IP connection, and the NASS receives the message.

The message may be any one of the following: a PPP connection establishment request message, a DHCP request message, an attachment request message, or a PDN connection establishment request message, and so on.

Step 502: Triggered by the foregoing message, the NASS entity, according to the identity of the UE, associates routing decision information which corresponds to the UE, such as a local routing policy and subscription data of a user, and the NASS entity determines to provide that a local routing service for the UE according to the routing decision information.

For a specific determining process of the NASS entity, reference may be made to the BRAS example in step 302 of a second example.
Step 503: The NASS entity initiates an access parameter transfer request message to the RACS entity, where the request message includes an indication for providing the local routing service.
Step 504: The RACS entity receives the access parameter transfer request message, and under the indication, formulates, according to control rule decision information, the policy and charging control rule that is used for the local routing service.

For a specific implementation manner, reference may be made to the Policy Controller example in step 304 of the second example.

Step 505: The RACS entity sends a determined policy and charging control rule of the local routing service through a policy control rule installation request message to the RCEF for execution.

In this example, the foregoing RACS entity may also be replaced by a PCRF entity. A specific execution process is not repeatedly described here.

Through a technical means of enabling the RCEF to acquire the policy and charging control rule in the TISPAN defined scene where the fixed network connects to the EPC, the method provided in this example realizes an effect of executing the policy and charging control when the local routing service is provided for the user.

### Example 5

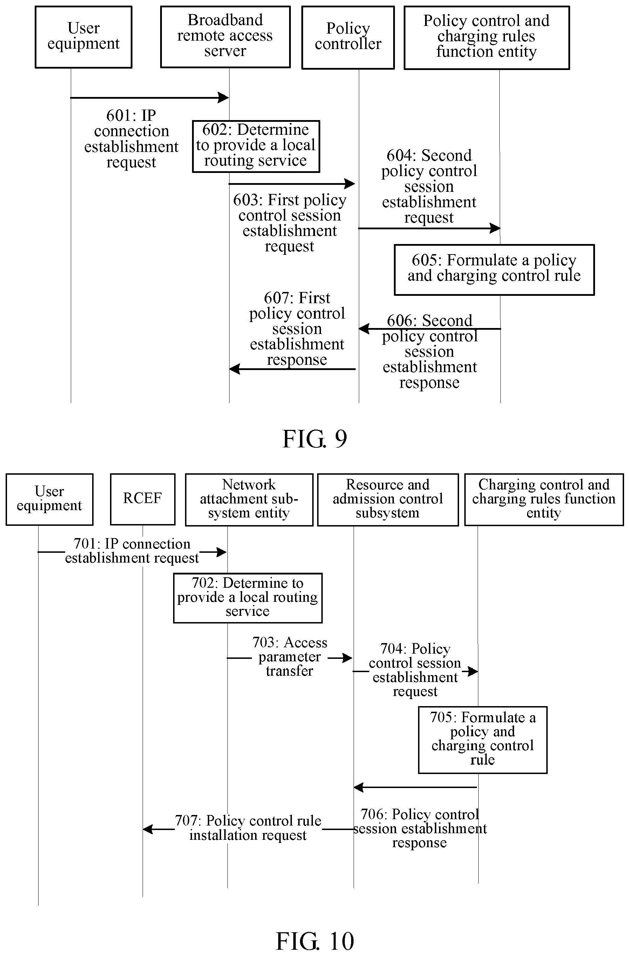

This example provides a method for implementing policy and charging control specifically with reference to FIG. 9. FIG. 9 is mainly applicable to a BBF defined scene where a fixed network connects to an EPC, and a policy server (that is, Policy Controller, which mainly serves the fixed network) of an access network and a policy server (that is, PCRF entity, which mainly serves a mobile network) of the EPC are independently deployed. In this scene, a BRAS has a function of connecting a UE and a network and a function of executing a policy and charging control rule, and therefore, it is equivalent to an access control entity and is also equivalent to a policy executing entity. In this example, two policy servers (that is, Policy Controller and PCRF entity) exist at the same time. However, because the Policy Controller is mainly used to forward an indication of local routing to the PCRF entity, it is equivalent to a transfer policy server in this embodiment, while formulation of the policy and charging control rule is executed by the PCRF entity.
Step 601: The UE initiates to the BRAS a message for establishing a connection, where the message includes an identity of the UE and specifies a request for establishing a new IP connection, and the BRAS receives the message.Step 602: Triggered by the foregoing message, the BRAS, according to the identity of the UE, associates routing decision information which corresponds to the UE, such as a local routing policy and subscription data of a user, and according to the routing decision information, determines to provide a local routing service for the UE.
Step 603: The BRAS initiates a first policy control session establishment request message to the Policy Controller, where the request message includes an indication for providing the local routing service.
Step 604: The Policy Controller sends a second policy control session establishment request message to the PCRF entity, where the request message includes the indication for providing the local routing service.
   This step may also adopt an implicit indication manner. For example, the Policy Controller sends an IP-CAN session establishment request message in a policy control session to represent a request for providing the local routing service; or the Policy Controller sends a gateway control session establishment request message in the policy control session to represent a request for providing a home routing service.
Step 605: The PCRF entity receives the second policy control session establishment request message, and under the indication of the message, formulates, according to control rule decision information, the policy and charging control rule that is used for the local routing service.
Step 606: The PCRF entity sends the policy and charging control rule of the local routing service through a second policy control session establishment response message to the Policy Controller.
Step 607: After receiving the foregoing response message, the Policy Controller sends the policy and charging control rule of the local routing service through a first policy control session establishment response message to the BRAS for execution.

Through a technical means of enabling the BRAS to acquire the policy and charging control rule in the BBF defined scene where the fixed network connects to the EPC, and the policy server of the access network and the policy server of the EPC are independently deployed, the method provided in this example realizes an effect of executing the policy and charging control when the local routing service is provided for the user.

### Example 6

This example provides a method for implementing policy and charging control specifically with reference to FIG. 10. FIG. 10 is mainly applicable to a TISPAN defined scene where a fixed network connects to an EPC, and a policy server (that is, RACS entity, which mainly serves users of the fixed network) of an access network and a policy server (that is, PCRF entity, which mainly serves users of a mobile network) of the EPC are independently deployed. In this scene, a NASS entity has a function of connecting a UE and a network, and it may be equivalent to an access control entity; the RCEF has a function of executing a policy and charging control rule, and therefore, it may be regarded as a policy executing entity. In this embodiment, two policy servers (that is, RACS entity and PCRF entity) exist at the same time. However, the RACS entity is mainly used to forward an indication of local routing to the PCRF entity, and therefore it is equivalent to a transfer policy server in this example, while a function of formulating the policy and charging control rule is executed by the PCRF entity.
Step 701 to step 703 may be the same as steps 501 to 503 in the foregoing fourth embodiment.
Step 704: After receiving the access parameter transfer request message, the RACS entity is triggered to initiate a policy control session establishment request message to the PCRF entity, where the request message includes an indication for providing a local routing service.
   This step may also adopt an implicit indication manner. For example, a Policy Controller sends an IP-CAN session establishment request message to represent a request for providing the local routing service; or the Policy Controller sends a gateway control session establishment request message to represent a request for providing a home routing service.
Step 705: After receiving the request message, the PCRF entity formulates, according to control rule decision information, the policy and charging control rule that is used for the local routing service.
   For a specific process of formulating the policy and charging control rule that is used for the local routing service, reference may be made to the Policy Controller example in step 304 of a second embodiment.
Step 706: The PCRF entity sends the policy and charging control rule of the local routing service through a policy control session establishment response message to the RACS entity.
Step 707: The RACS entity sends the policy and charging control rule of the local routing service through a policy control rule installation request message to the RCEF for execution.

Through a technical means of enabling the RCEF to acquire the policy and charging control rule in the TISPAN defined scene where the fixed network connects to the EPC, and the policy server of the access network and the policy server of the EPC are independently deployed, the method provided in this embodiment realizes an effect of executing the policy and charging control when the local routing service is provided for the user.

### Example 7

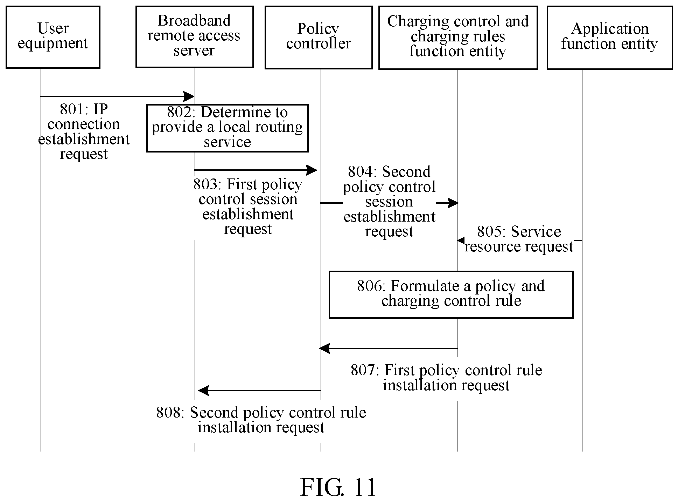

This example provides a method for implementing policy and charging control specifically with reference to FIG. 11. FIG. 11 is mainly applicable to a BBF defined scene where a fixed network connects to an EPC, and a policy server (that is, Policy Controller, which mainly serves users of the fixed network) of an access network and a policy server (that is, PCRF entity, which mainly serves users of a mobile network) of the EPC are independently deployed. In this scene, a BRAS has a function of connecting a UE and a network and a function of executing a policy and charging control rule, and therefore, it is equivalent to an access control entity and is also equivalent to a policy executing entity. It is the same as in a fifth example, in this example, two policy servers (that is, Policy Controller and PCRF entity) exist at the same time. However, because the Policy Controller is mainly used to forward an indication of local routing to the PCRF entity, it is equivalent to a transfer policy server in this example, while a function of formulating the policy and charging control rule is executed by the PCRF entity. It can be known from FIG. 11, a difference between this example and the fifth example is that during an application process, if a service resource request sent by an AF entity exists, a specific processing manner is as follows:

For step 801 to step 804, reference may be made to step 601 to step 604 in the fifth embodiment.

Step 805: The PCRF entity receives a service resource request message from the AF, where the request message includes an identity of a requesting UE, and service resource request information.

Specific content of the service resource request information may be the same as in the prior art, and include a type of a requested service, bandwidth, and encoding manner. For example, a request for providing a video service for the UE, and a bandwidth is required to be 1 Mbit/s, and so on.

Step 806: The PCRF entity formulates, according to the service resource request information, the policy and charging control rule that is used for a local routing service.

In the foregoing step 806, when formulating the policy and charging control rule of the local routing service, the PCRF entity further needs to refer to resource request information of the AF. A specific process and manner of formulation after reference is made are the same as in the prior art, and are not repeatedly described here.
Step 807: The PCRF entity sends the policy and charging control rule of the local routing service through a first policy control rule installation request message to the Policy Controller.
Step 808: After receiving the foregoing first request message, the Policy Controller sends the policy and charging control rule of the local routing service through a second policy control rule installation request message to the BRAS for execution.

Definitely, during the process of step 807 and step 808, the identity of the UE may further need to be provided so that the BRAS may know a UE to which the policy and charging control rule is applied.

The method provided in this example is applicable to the BBF defined scene where the fixed network connects to the EPC, and the policy server of the access network and the policy server of the EPC are independently deployed, and when the service resource request from the AF entity is received, through a technical means of enabling the BRAS to acquire the policy and charging control rule, realizes an effect of executing the policy and charging control when the local routing service is provided for the user.

### Example 8

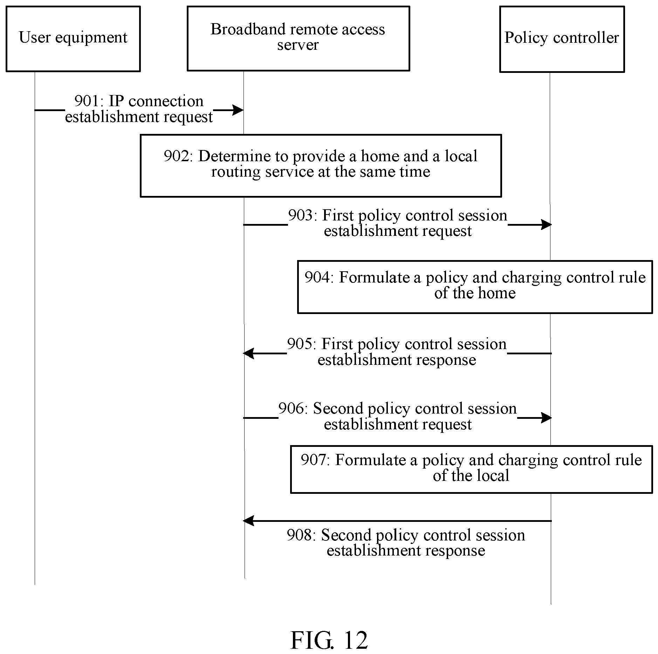

This example provides a method for implementing policy and charging control specifically with reference to FIG. 12. FIG. 12 is mainly applicable to a BBF defined scene where a fixed network connects to an EPC. In this scene, a BRAS has a function of connecting a UE and a network and a function of executing a policy and charging control rule, and therefore, it is equivalent to an access control entity and is also equivalent to a policy executing entity; a Policy Controller is a transfer policy server in this example and is used to formulate the policy and charging control rule.
Step 901 is the same as step 301 in a second example.
Step 902: Triggered by the foregoing message, the BRAS, according to an identity of the UE, associates routing decision information which corresponds to the UE, such as a local routing policy and subscription data of a user, and according to the routing decision information, determines that a local routing service and a home routing service need to be provided for the UE at the same time.
   For example, the BRAS associates the subscription data of the user and the local routing policy of the UE according to the identity of the UE, where the subscription data of the user indicates that the UE is a fixed network user and requests that calls and Internet access are available through the fixed network; the local routing policy indicates that the local routing service is provided for a user who accesses the Internet through the fixed network, the home routing service is provided for a user who makes calls through the fixed network to maintain good continuity, and the local routing service and the home routing service are provided at the same time for a user who accesses the Internet through the fixed network and also makes calls through the fixed network.
Step 903: The BRAS initiates a first policy control session establishment request message to the Policy Controller, where the request message includes an indication for providing the home routing service.
   This step may also adopt an implicit indication manner. For example, the BRAS sends an IP-CAN session establishment request message to represent a request for the local routing service; the BRAS sends a gateway control session establishment request message to represent a request for the home routing service.
Step 904: The Policy Controller formulates the policy and charging control rule that is used for the home routing service according to control rule decision information.
   A specific process of formulating the policy and charging control rule may be the same as a process of a policy and charging control rule of home routing in the prior art.
Step 905: The Policy Controller sends the policy and charging control rule of the home routing service through a first policy control session establishment response message to the BRAS for execution.
For step 906 to step 908, reference may be made to step 303 to step 305 in the second example.

Their major difference is that the BRAS sends a second policy control session establishment request message to the Policy Controller and acquires a second policy control session establishment response message.

It should be noted that step 903 to step 905 and step 906 to step 908 in this example are not restricted in terms of sequence during execution, and may even be executed at the same time. In addition, the Policy controller in this example may also be replaced by a PCRF entity, which is not repeatedly described here again.

### Example 9

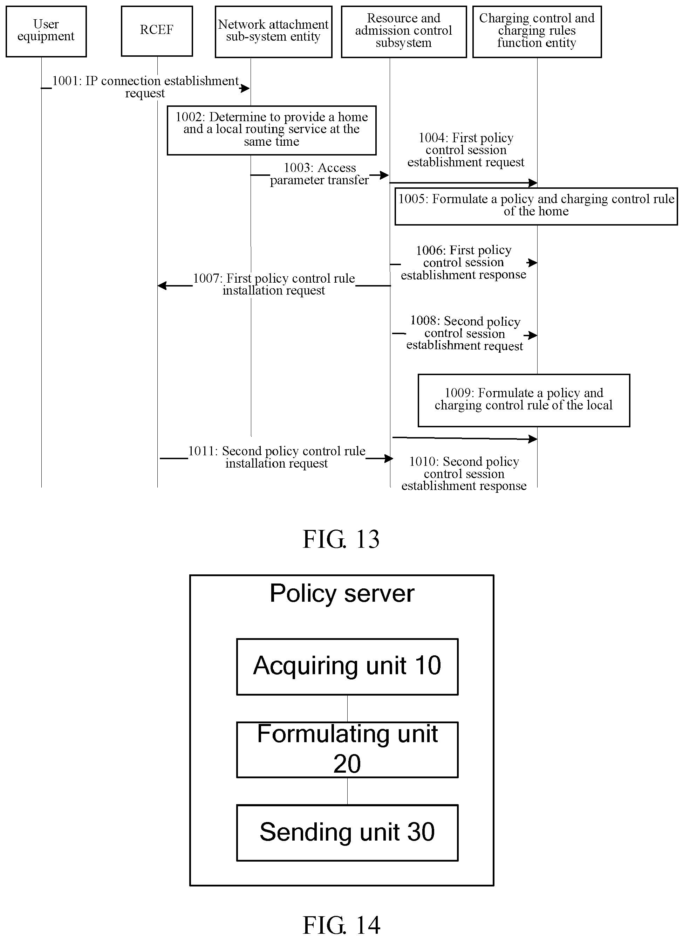

This example provides a method for implementing policy and charging control specifically with reference to FIG. 13. FIG. 13 is mainly applicable to a TISPAN defined scene where a fixed network connects to an EPC, and a policy server (that is, RACS entity, which mainly serves users of the fixed network) of an access network and a policy server (that is, PCRF entity, which mainly serves users of a mobile network) of the EPC are independently deployed. In this scene, a NASS entity has a function of connecting a UE and a network, and it may be equivalent to an access control entity; an RCEF has a function of executing a policy and charging control rule, and therefore, it may be regarded as a policy executing entity. It is the same as in a sixth example, in this example, two policy servers (that is, RACS entity and PCRF entity) exist at the same time. However, the RACS entity is mainly used to forward an indication of local routing to the PCRF entity, and therefore, it is equivalent to a transfer policy server in the present invention, while a function of formulating the policy and charging control rule is executed by the PCRF entity. It can be known from FIG. 13, a major difference between this example and the sixth example is that a specific execution manner in a case that a home routing service needs to be provided as decided at the same time is described.
Step 1001: It is the same as step 501.
Step 1002: Triggered by the foregoing message, the NASS entity, according to an identity of the UE, associates routing decision information which corresponds to the UE, such as a local routing policy and subscription data of a user, and determines, according to the routing decision information, that a local routing service and the home routing service need to be provided for the UE at the same time.
   For a specific determining process, reference may be made to an example in the foregoing step 902.
Step 1003: The NASS entity sends an access parameter transfer message to the RACS entity, where the message includes an indication for providing the local routing service and the home routing service at the same time.
Step 1004: The RACS entity initiates a first policy control session establishment request message to the PCRF entity. For the specific content, reference may be made to the foregoing step 903.
Step 1005: The PCRF entity formulates the policy and charging control rule that is used for the home routing service according to control rule decision information.
   A specific process of formulating the policy and charging control rule may be the same as a process of formulating the policy and charging control rule of the home routing service in the prior art.
Step 1006: The PCRF entity sends the policy and charging control rule that is used for the home routing service through a first policy control session establishment response message to the RACS entity.
Step 1007: The RACS entity sends the policy and charging control rule that is used for the home routing service through a first policy control rule installation request message to the RCEF for execution.
Step 1008: The RACS entity initiates a second policy control session establishment request message to the PCRF entity, where the request message includes the indication for providing the local routing service.
   This step may also adopt an implicit indication manner. For example, the second policy control session establishment request message is specifically an IP-CAN session request message, and the RACS sends the IP-CAN session establishment request message to represent a request for the local routing service.
Step 1009: It is the same as step 605 in a fifth embodiment.
Step 1010: The PCRF entity sends the policy and charging control rule of the local routing service through a second policy control session establishment response message to the RACS entity.
Step 1011: After receiving the response message, the RACS entity sends the policy and charging control rule of the local routing service through a second policy control rule installation request to the RCEF for execution.

It should be noted that steps 1003 to 1007 and steps 1008 to 1011 in this embodiment are not restricted in terms of sequence, and may even be executed at the same time; in addition, step 1007 and step 1011 may belong to different policy control rule installation request messages between the RACS entity and the RCEF, or a same policy control rule installation request message, which is not restricted here. Step 1004 and step 1008 may be requests of different sub-sessions in a same policy control session, and may also be two independent policy control sessions.

In this example of the present invention, with reference to the case where home routing and local routing need to be provided for the user at the same time, a method for a policy and charging control rule of routing is put forward, and a technical effect that the access control entity cannot correctly perform policy and charging control when providing the local routing service for the user is achieved.

### Example 10

This example provides a policy server, where the policy server may specifically be a Policy controller, or an RACS entity, or a PCRF entity, and so on, according to a deployment scene of a network. As shown in FIG. 14, the policy server includes an acquiring unit 10, a formulating unit 20, and a sending unit 30.

The acquiring unit 10 is configured to acquire a session establishment request from an access control entity, where the session establishment request includes an indication for providing a local routing service; the formulating unit 20 is configured to formulate a policy and charging control rule that is used for the local routing service according to control rule decision information under the indication that is acquired by the acquiring unit 10; and the sending unit 30 is configured to send the policy and charging control rule which is of the local routing service and is formulated by the formulating unit 20 to a policy executing entity for execution.

When the session establishment request acquired by the acquiring unit 10 includes an indication for providing a home routing service, accordingly, the formulating unit 20 is further configured to formulate the policy and charging control rule that is used for the home routing service according to control rule decision information; and the sending unit 30 is further configured to send the policy and charging control rule of the home routing service to the policy executing entity for execution.

The policy server provided in this example may formulate, according to the indication for the local routing service, a corresponding policy and charging control rule, and send the formulated rule to the policy executing entity for execution, thereby implementing a technical effect where the policy and charging control rule of the local routing service is provided for the user in the case that a local route does not pass through a PGW.

### Example 11

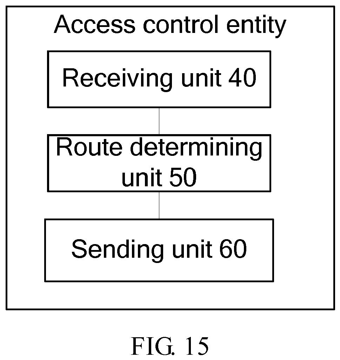

This example provides an access control entity, where the access control entity may, according to different network deployment scenes, specifically be: a BRAS, a NASS entity, and so on. As shown in FIG. 15, the access control entity includes: a receiving unit 40, a route determining unit 50, and a sending unit 60.

The receiving unit 40 is configured to receive from a UE a message that requests connection establishment, where the message that requests connection establishment specifies a request for establishing a new IP connection, and the message that requests connection establishment includes an identity of the user equipment; the route determining unit 50 is configured to provide a local routing service for the UE according to the identity; the sending unit 60 is configured to send a session establishment request to a transfer policy server, where the session establishment request includes an indication which is for providing the local routing service and is acquired according to a determination result of the route determining unit 50.

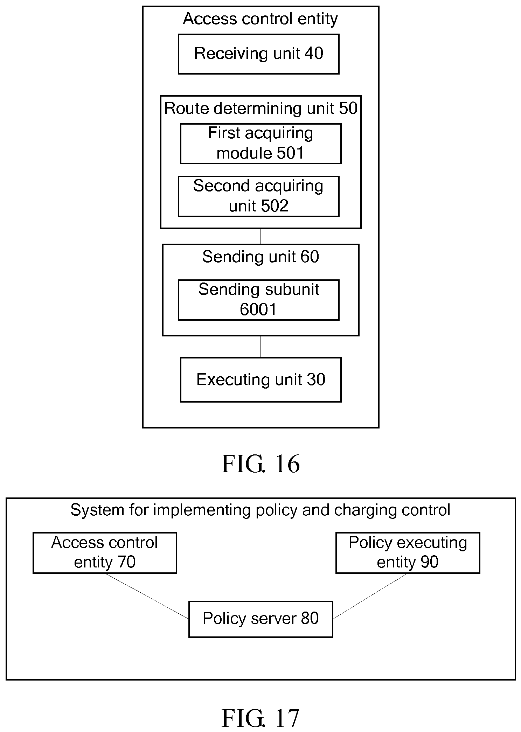

In another example of the present invention, the access control entity is shown in FIG. 16, and the route determining unit 50 includes a first acquiring module 501, and /or a second acquiring unit 502E.

The first acquiring module 501 is configured to associate routing decision information of corresponding user equipment according to the identity of the user equipment, and determine to provide the local routing service for the user equipment according to the routing decision information.

The second acquiring unit 502 is configured to send an authentication or address allocation request message that carries the identity of the user equipment to an authentication server, and determine to provide the local routing service for the user equipment through a returned authentication or address allocation response message, where the authentication or address allocation request message is used to request the authentication server to determine, according to the routing decision information of the user equipment which corresponds to the identity of the user equipment, to provide the local routing service for the user equipment.

In addition, in this embodiment, as shown in FIG. 16, the route determining unit 50 is further configured to determine to provide a home routing service for the UE at the same time according to the routing decision information. Accordingly,

The sending unit 60 includes a sending subunit 6001. The sending subunit 6001 is configured to, when the route determining unit 50 determines to provide the local routing service and the home routing service for the user equipment at the same time according to the identity, send a first sub-request in the session establishment request to the transfer policy server, where the first sub-request includes the indication for providing the local routing service; and send a second sub-request in the session establishment request to the transfer policy server, where the second sub-request includes an indication for providing the home routing service; or,

The sending unit 60 is further configured to, when the route determining unit 50 determines to provide the local routing service and the home routing service for the user equipment at the same time according to the identity, send a second session establishment request to the transfer policy server, where the second session establishment request includes the indication for providing the home routing service.

The access control entity in this example may be used as the NASS entity, and may also be used as the BRAS; but especially, when being used as the BRAS, it further includes an executing unit 30.

The executing unit 30 is configured to, in a BBF defined scene where a fixed network connects to an EPC, after the sending unit 60 sends the session establishment request to the transfer policy server, receive and execute a policy and charging control rule which is of the local routing service and is sent by the transfer policy server.

Through a technical means of indicating by the access control entity provided in this example that a local routing manner is provided in a session request which is sent to the transfer policy server, it may be convenient for the transfer policy server to know, according to the indication, that a service data stream of a user does not pass through a PGW, and accordingly adopt and formulate the policy and charging control rule which is applicable to local routing, thereby realizing a technical effect of providing policy and charging control under local routing for the user.

### Example 12

This example provides a system for implementing policy and charging control. As shown in FIG. 17, this system includes an access control entity 70, a transfer policy server 80, and a policy executing entity 90.

The access control entity 70 is configured to send a session establishment request to the transfer policy server 80, where the session establishment request includes an indication for providing a local routing service, and the access control entity 70 includes a BRAS or a NASS.

The policy executing entity 90 is configured to receive a policy and charging control rule which is of the local routing service and is sent by the transfer policy server 80.

The transfer policy server 80 is configured to formulate the policy and charging control rule of the local routing service according to control rule decision information; or,

The transfer policy server is configured to send a policy control session establishment request to a PCRF entity, and receive the policy and charging control rule which is of the local routing service and is formulated by the PCRF entity according to the control rule decision information.

It should be noted that, in some scenes, the access control entity 70 and the policy executing entity 90 may be implemented through a specific device or apparatus. For example, in a BBF defined scene where a fixed network connects to an EPC, functions of both the access control entity 70 and the policy executing entity 90 are implemented through the BRAS.

In a local routing manner, the system provided in this example provides a solution for acquiring the policy and charging control rule, where association with a corresponding IP-CAN session is not required, and a PGW is not required to participate either, thereby realizing that in the case without the PGW, the local routing service of QoS control and service traffic charging may still be provided for a user.

Through descriptions of the foregoing examples, persons skilled in the art may clearly understand that the present invention may be implemented through software plus a necessary general hardware platform, and definitely may also be implemented through hardware. In most cases, however, the former one is an exemplary implementation manner. Based on such understanding, the technical solutions of the present invention in essence or a part that contributes to the prior art may be embodied in a form of a software product. This computer software product is stored in a readable storage medium, such as a floppy disk, a hard disk or a compact disk of a computer, and includes several instructions that are used to make a device execute the method provided in each example of the present invention.

The foregoing descriptions are merely specific implementation manners of the present invention. However, the protection scope of the present invention is not limited to this. Any changes or replacements that may be easily thought of by persons skilled in the art within the technical scope disclosed in the present invention should fall within the protection scope of the present invention. Therefore, the protection scope of the present invention should be subject to the protection scope of the claims.

## Claims

1. A method for implementing policy and charging, wherein a fixed network connects to an evolved packet core network, comprising:
receiving (301), by an access control entity, from a user equipment a message that requests connection establishment, wherein the message that requests connection establishment specifies a request for establishing a new IP connection and the message that requests connection establishment comprises an identity of the user equipment; and the access control entity comprises a broadband remote access server, BRAS;
associating (302), by the access control entity, routing decision information of corresponding user equipment according to the identity of the user equipment, and determining to provide the local routing service for the user equipment according to the routing decision information;
sending (303;101), by the access control entity, a session establishment request to a transfer policy server, wherein the session establishment request comprises an indication for providing a local routing service;
formulating (304), by the transfer policy server, a policy and charging control rule according to control rule decision information; wherein the control rule decision information comprises a local control policy, wherein the policy and charging control rule is used for a local routing service;
sending (305; 102), by the transfer policy server, the policy and charging control rule of the local routing service through a policy control session response message to a policy executing entity, wherein the policy executing entity is the BRAS.

2. The method according to claim 1, wherein, the control rule decision information further comprises at least one of the following:
subscription data of a user; and
service resource request information of an application function entity.

3. The method according to claim 1, wherein:
the transfer policy server comprises a policy controller.

4. The method according to claim 1,
wherein the session establishment request comprises:
a policy control session establishment request message, wherein the policy control session establishment request message at least comprises an IP connectivity access network session message, or an S9 session message.

5. The method according to any one of claims 1 to 4, wherein when a sub-request of the session establishment request comprises an indication for providing a home routing service; or, a second session establishment request which is from the access control entity is acquired, wherein the second session establishment request comprises an indication for providing a home routing service, the method further comprises:
formulating the policy and charging control rule of the home routing service according to control rule decision information; and
sending the policy and charging control rule of the home routing service to the policy executing entity for execution.

6. A system for implementing policy and charging, comprising an access control entity (70) and a transfer policy server (80), wherein:
the access control entity (70) is configured to receive from a user equipment a message that requests connection establishment, wherein the message that requests connection establishment specifies a request for establishing a new IP connection and the message that requests connection establishment comprises an identity of the user equipment; and the access control entity comprises a broadband remote access server, BRAS; associate routing decision information of corresponding user equipment according to the identity of the user equipment, and determine to provide the local routing service for the user equipment according to the routing decision information; send a session establishment request to the transfer policy server, wherein the session establishment request comprises an indication for providing a local routing service;
the transfer policy server (80) is configured to formulate a policy and charging control rule according to control rule decision information; wherein the control rule decision information comprises a local control policy, wherein the policy and charging control rule is used for a local routing service; and send the policy and charging control rule through a policy control session response message to a policy executing entity (90), wherein the policy executing entity is the BRAS.

## Patentansprüche

1. Verfahren zur Umsetzung von Richtlinien und Gebühren, wobei ein festes Netzwerk sich mit einem evolvierten Paketkernnetzwerk verbindet, umfassend:
Empfangen (301), durch eine Zugriffssteuereinheit von einem Benutzergerät, einer Nachricht, die einen Verbindungsaufbau anfordert, wobei die Nachricht, die einen Verbindungsaufbau anfordert, eine Anforderung zum Aufbau einer neuen IP-Verbindung festlegt und die Nachricht, die einen Verbindungsaufbau anfordert, eine Kennung des Benutzergeräts umfasst; und die Zugriffssteuereinheit einen Breitband-Remotezugriffsserver (Broadband Remote Access Server, BRAS) umfasst;
Zuordnen (302), durch die Zugriffssteuereinheit, einer Weiterleitungsentscheidungsinformation des entsprechenden Benutzergeräts gemäß der Kennung des Benutzergeräts und Bestimmen, dass der lokale Weiterleitungsdienst für das Benutzergerät gemäß der Weiterleitungsentscheidungsinformation bereitgestellt wird;
Senden (303, 101), durch die Zugriffssteuereinheit, einer Sitzungsaufbauanforderung an einen Übertragungsrichtlinienserver, wobei die Sitzungsaufbauanforderung eine Angabe zum Bereitstellen eines lokalen Weiterleitungsdienstes umfasst;
Formulieren (304), durch den Übertragungsrichtlinienserver, einer Richtlinien- und Gebührensteuerungsregel gemäß einer Steuerungsregel-Entscheidungsinformation;
wobei die Steuerungsregel-Entscheidungsinformation eine lokale Steuerungsrichtlinie umfasst, wobei die Richtlinien- und Gebührensteuerungsregel für einen lokalen Weiterleitungsdienst verwendet wird;
Senden (305, 102), durch den Übertragungsrichtlinienserver, der Richtlinien- und
Gebührensteuerungsregel des lokalen Weiterleitungsdienstes durch eine Richtliniensteuerungssitzungs-Antwortnachricht an eine Richtlinienausführungseinheit, wobei die Richtlinienausführungseinheit der BRAS ist.

2. Verfahren nach Anspruch 1, wobei die Steuerungsregel-Entscheidungsinformation ferner mindestens eines der Folgenden umfasst:
Teilnehmerdaten eines Benutzers; und
eine Dienstressourcenanforderungsinformation einer Anwendungsfunktionseinheit.

3. Verfahren nach Anspruch 1, wobei: der Übertragungsrichtlinienserver eine Richtliniensteuerung umfasst.

4. Verfahren nach Anspruch 1, wobei die Sitzungsaufbauanforderung umfasst:
eine Richtliniensteuerungs-Sitzungsaufbauanforderungsnachricht, wobei die Richtliniensteuerungs-Sitzungsaufbauanforderungsnachricht mindestens eine IP-Konnektivitätszugriffsnetzwerk-Sitzungsnachricht oder eine S9-Sitzungsnachricht umfasst.

5. Verfahren nach einem der Ansprüche 1 bis 4, wobei, wenn eine untergeordnete Anforderung der Sitzungsaufbauanforderung eine Angabe zum Bereitstellen eines Heim-Weiterleitungsdienstes umfasst; oder eine zweite Sitzungsaufbauanforderung, die von der Zugriffssteuereinheit stammt, erfasst wird, wobei die zweite Sitzungsaufbauanforderung eine Angabe zum Bereitstellen eines Heim-Weiterleitungsdienstes umfasst, das Verfahren ferner umfasst:
Formulieren der Richtlinien- und Gebührensteuerungsregel des Heim-Weiterleitungsdienstes gemäß der Steuerungsregel-Entscheidungsinformation; und
Senden der Richtlinien- und Gebührensteuerungsregel des Heim-Weiterleitungsdienstes zur Ausführung an die Richtlinienausführungseinheit.

6. Verfahren zur Umsetzung von Richtlinien und Gebühren, umfassend eine Zugriffssteuereinheit (70) und einen Übertragungsrichtlinienserver (80), wobei:
die Zugriffssteuereinheit (70) konfiguriert ist, um von einem Benutzergerät eine Nachricht zu empfangen, die einen Verbindungsaufbau anfordert, wobei die Nachricht, die einen Verbindungsaufbau anfordert, eine Anforderung zum Aufbau einer neuen IP-Verbindung festlegt und die Nachricht, die einen Verbindungsaufbau anfordert, eine Kennung des Benutzergeräts umfasst; und die Zugriffssteuereinheit einen Breitband-Remotezugriffsserver (Broadband Remote Access Server, BRAS) umfasst;
eine Weiterleitungsentscheidungsinformation des entsprechenden Benutzergeräts gemäß der Kennung des Benutzergeräts zuzuordnen und zu bestimmen, dass der lokale Weiterleitungsdienst für das Benutzergerät gemäß der Weiterleitungsentscheidungsinformation bereitgestellt wird; eine Sitzungsaufbauanforderung an den Übertragungsrichtlinienserver zu senden, wobei die Sitzungsaufbauanforderung eine Angabe zum Bereitstellen eines lokalen Weiterleitungsdienstes umfasst;
der Übertragungsrichtlinienserver (80) konfiguriert ist, um eine Richtlinien- und
Gebührensteuerungsregel gemäß einer Steuerungsregel-Entscheidungsinformation zu formulieren; wobei die Steuerungsregel-Entscheidungsinformation eine lokale Steuerungsrichtlinie umfasst, wobei die Richtlinien- und Gebührensteuerungsregel für einen lokalen Weiterleitungsdienst verwendet wird; und die Richtlinien- und Gebührensteuerungsregel durch eine Richtliniensteuerungssitzungs-Antwortnachricht an eine Richtlinienausführungseinheit (90) zu senden, wobei die Richtlinienausführungseinheit der BRAS ist.

## Revendications

1. Procédé de mise en oeuvre de politique et de facturation, dans lequel un réseau fixe se connecte à un réseau central de paquets évolué, comprenant les étapes consistant à :
recevoir (301) d'un équipement d'utilisateur, par une entité de contrôle d'accès, un message qui demande l'établissement d'une connexion, le message qui demande l'établissement d'une connexion spécifiant une demande pour établir une nouvelle connexion IP et le message qui demande l'établissement d'une connexion contenant une identité de l'équipement d'utilisateur ; et l'entité de contrôle d'accès comprenant un serveur d'accès distant à bande large, BRAS ;
associer (302), par l'entité de contrôle d'accès, des informations de décision d'acheminement d'un équipement d'utilisateur correspondant en fonction de l'identité de l'équipement d'utilisateur, et décider de fournir le service d'acheminement local destiné à l'équipement d'utilisateur en fonction des informations de décision d'acheminement ;
envoyer (303 ; 101), par l'entité de contrôle d'accès, une demande d'établissement de session à un serveur de politiques de transfert, la demande d'établissement de session contenant une indication demandant la fourniture d'un service d'acheminement local ;
formuler (304), par le serveur de politiques de transfert, une règle de contrôle de politique et de facturation en fonction d'informations de décision de règle de contrôle, les informations de décision de règle de contrôle contenant une politique de contrôle locale, la règle de contrôle de politique et de facturation étant utilisée pour un service d'acheminement local ;
envoyer (305 ; 102), par le serveur de politiques de transfert, la règle de contrôle de politique et de facturation du service d'acheminement local au moyen d'un message de réponse de session de contrôle de politique à une entité d'exécution de politique, l'entité d'exécution de politique étant le BRAS.

2. Procédé selon la revendication 1, dans lequel les informations de décision de règle de contrôle contiennent également au moins l'un des éléments suivants :
des données d'abonnement d'un utilisateur ; et
des informations de demande de ressource de service d'une entité de fonction d'application.

3. Procédé selon la revendication 1, dans lequel :
le serveur de politiques de transfert comprend un contrôleur de politique.

4. Procédé selon la revendication 1,
dans lequel la demande d'établissement de session comprend :
un message de demande d'établissement de session de contrôle de politique, le message de demande d'établissement de session de contrôle de politique contenant au moins un message de session de réseau d'accès à connectivité IP ou un message de session S9.

5. Procédé selon l'une quelconque des revendications 1 à 4, le procédé, lorsqu'une sous-demande de la demande d'établissement de session contient une indication demandant la fourniture d'un service d'acheminement domestique ou lorsqu'une deuxième demande d'établissement de session qui provient de l'entité de contrôle d'accès est acquise, la deuxième demande d'établissement de session contenant une indication demandant la fourniture d'un service d'acheminement domestique, comprenant les étapes consistant à :
formuler la règle de contrôle de politique et de facturation du service d'acheminement domestique en fonction d'informations de décision de règle de contrôle ; et
envoyer la règle de contrôle de politique et de facturation du service d'acheminement domestique à l'entité d'exécution de politique pour exécution.

6. Système de mise en oeuvre de politique et de facturation, comprenant une entité de contrôle d'accès (70) et un serveur de politiques de transfert (80), dans lequel :
l'entité de contrôle d'accès (70) est configurée pour recevoir d'un équipement d'utilisateur un message qui demande l'établissement d'une connexion, le message qui demande l'établissement d'une connexion spécifiant une demande pour établir une nouvelle connexion IP et le message qui demande l'établissement d'une connexion contenant une identité de l'équipement d'utilisateur ; et l'entité de contrôle d'accès comprenant un serveur d'accès distant à bande large, BRAS ;
associer des informations de décision d'acheminement d'un équipement d'utilisateur correspondant en fonction de l'identité de l'équipement d'utilisateur, et décider de fournir le service d'acheminement local destiné à l'équipement d'utilisateur en fonction des informations de décision d'acheminement ; envoyer une demande d'établissement de session à un serveur de politiques de transfert, la demande d'établissement de session contenant une indication demandant la fourniture d'un service d'acheminement local ;
le serveur de politiques de transfert (80) est configuré pour formuler une règle de contrôle de politique et de facturation en fonction d'informations de décision de règle de contrôle, les informations de décision de règle de contrôle contenant une politique de contrôle locale, la règle de contrôle de politique et de facturation étant utilisée pour un service d'acheminement local ; et envoyer la règle de contrôle de politique et
de facturation au moyen d'un message de réponse de session de contrôle de politique à une entité d'exécution de politique (90),
l'entité d'exécution de politique étant le BRAS.
